# FASCICULE DE BREVET EUROPEEN

(11) **EP 0 878 332 B1**
(45) Date de publication et mention de la délivrance du brevet: **10.07.2002**
(21) Numéro de dépôt: 98107687.0
(22) Date de dépôt: 28.04.1998
(51) Int. Cl.: B60G 3/01, B60G 17/015, B60K 7/00

(54) **Ensemble comportant une roue et une suspension intégrée à la roue**
Einheit mit einem Rad und einer in einer Radnabe eingebauten Aufhängung
Unit comprising a wheel and a suspension integrated in the wheel hub

(30) Priorité: 16.05.1997 FR 9706226
(43) Date de publication de la demande: 18.11.1998
(73) Titulaire: Conception et Développement Michelin, 1762 Givisiez (CH)
(72) Inventeur: Laurent, Daniel, 1723 Marly (CH); Sebe, Marc, 1723 Marly (CH); Walser, Daniel, 1763 Granges-Paccot (CH)
(74) Mandataire: Bauvir, Jacques

(56) Documents cités:
- DE-C- 715 893
- DE-U- 9 402 564
- FR-A- 373 512
- US-A- 1 984 694
- US-A- 2 105 171
- US-A- 2 155 521
- US-A- 2 939 344
- US-A- 3 578 354
- US-A- 3 666 178

## Description

La présente invention concerne la liaison au sol de véhicules. Elle concerne tant le guidage d'une roue de véhicule par rapport au châssis de ce véhicule, que le contrôle du débattement de la roue par rapport au châssis.

On sait qu'une roue est montée sur un moyeu, et que le moyeu est monté sur un porte-roue par l'intermédiaire d'un roulement matérialisant l'axe de rotation de la roue. Le guidage de la roue consiste à permettre un déplacement du porte-roue par rapport au véhicule, d'une ampleur suffisante pour la suspension du véhicule. En même temps, le guidage de la roue doit être tel que le contrôle de la trajectoire du véhicule est assuré avec la plus grande rigueur possible. Pour un exemple de suspension connue, on pourra consulter le brevet US 2,155,521. Le mouvement de débattement que l'on recherche est de grande ampleur dans le sens vertical. On peut souhaiter permettre un faible mouvement dans le sens longitudinal, alors qu'idéalement on cherche à éviter tout mouvement relatif dans le sens transversal. En outre, le braquage et les variations de carrossage que pourraient induire tous ces mouvements doivent être rigoureusement contenus, ce qui apporte aussi une contrainte de conception dont l'homme du métier doit tenir compte.

Si on appelle " plan " de la roue le plan perpendiculaire à l'axe de rotation de la roue, passant par le milieu de la roue, ou plus précisément par le centre de l'aire de contact avec le sol d'un pneu ou d'un bandage élastique monté sur ladite roue, la maîtrise des mouvements de débattement revient à dire que le guidage doit assurer une position rigoureusement maîtrisée du plan de la roue par rapport au châssis.

Outre l'aspect guidage du plan de la roue, la suspension doit aussi assurer le report de la charge du véhicule sur la roue et le contrôle de l'amplitude des mouvements autorisés par le guidage. C'est le rôle habituellement dévolu aux ressorts et aux amortisseurs, ou aux organes combinant les fonctions ressort (flexibilité) et amortissement (empêcher l'entretien des oscillations).

Toutes les suspensions utilisées à l'heure actuelle sur les véhicules ont pour caractéristique commune d'être plutôt encombrantes. Les bras de suspension doivent avoir une certaine longueur pour que leur mouvement angulaire ne s'accompagne pas par exemple de variations de voie trop importantes (épures de suspension). Même la jambe de force Mac Pherson, dont on sait que l'utilisation croissante vient du plus grand espace qu'elle laisse pour implanter un groupe moto-propulseur en position transversale, apporte son lot d'inconvénients dont son encombrement en hauteur.

Par ailleurs, la recherche d'un compromis toujours meilleur entre le confort de suspension et la tenue de route conduit à proposer des suspensions dites actives ou semi-actives, dont le pilotage est maintenant rendu possible par les progrès de l'électronique. En général, cela conduit à rendre plus encombrante encore l'implantation de la suspension sur le véhicule, en augmentant l'encombrement des ressorts et/ou des amortisseurs, voire en ajoutant des organes supplémentaires formant ressort ou amortisseur.

L'objectif de l'invention consiste à proposer un ensemble de liaison au sol complet, facile à intégrer à un véhicule, tout en permettant une suspension dont les caractéristiques d'élasticité et d'amortissement sont bien maîtrisées.

L'invention propose un ensemble de liaison au sol d'un véhicule automobile. Ledit ensemble comporte un moyeu conçu pour supporter une roue, ladite roue comprenant essentiellement un disque et une jante, ladite jante ayant une largeur de référence et un diamètre de référence, ledit ensemble comportant un porte-roue définissant l'axe de rotation du moyeu, un support comprenant un organe de guidage pour guider en translation relative le porte-roué par rapport au support, le support comprenant des moyens de montage pour permettre le montage du support sur le châssis d'un véhicule, le porte-roue étant monté sur l'organe de guidage par l'intermédiaire d'un barreau allongé et unique, coulissant par rapport à et guidé par l'organe de guidage à rotation bloquée autour de l'axe de coulissement, le porte-roue étant monté sur le barreau aux deux extrémités de celui-ci, ledit ensemble comportant des moyens pour supporter la charge du véhicule transmise par le support au porte-roue, dans lequel le porte-roue, le barreau, et l'organe de guidage sont logés dans une enveloppe limite délimitée radialement par le diamètre de référence, et axialement, d'un côté par une limite fixée par le disque de ladite roue et de l'autre côté par un plan virtuel tangent à la jante.

Dans le présent mémoire, on entend par le terme « référence » une cote d'encombrement servant de point de repère pour la construction de l'ensemble, bien que la roue en elle-même, étant amovible, puisse être considérée comme ne faisant pas partie dudit ensemble. En pratique, ledit ensemble sera dessiné pour recevoir une ou quelques roues de dimensions déterminées. La référence en question donne une limite d'encombrement pour les organes de l'ensemble, quelle que soit la matérialisation précise de la roue et du pneu ou bandage élastique associé.

L'invention propose un ensemble permettant d'intégrer le guidage nécessaire au débattement de la roue, et les éléments permettant d'assurer la flexibilité requise et le contrôle du débattement à l'intérieur de la roue. De la sorte, les fonctions essentielles de la suspension (guidage du plan de roue, degré de liberté de débattement dans le sens voulu, et contrôle des mouvements de débattement) se trouvent intégrées à l'intérieur même du volume interne à la roue. Il est ainsi possible d'accrocher très simplement cet ensemble au châssis du véhicule de toute manière convenable, et notamment rigidement. Dans ce dernier cas, l'invention permet une mise en oeuvre très simple, car la liaison de l'ensemble au châssis du véhicule n'a pas d'autre fonction que d'assurer la transmission des efforts.

De préférence, pour en diminuer radicalement l'encombrement, l'invention vise à implanter autant d'organes utiles à la suspension que possible dans le volume disponible à l'intérieur de la roue, c'est à dire d'un côté du disque de la roue et radialement l'intérieur de la jante.

Les moyens électroniques d'asservissement dont on dispose à l'heure actuelle-permettent plus rapidement et plus directement de piloter un moteur électrique qu'un organe hydraulique ou pneumatique. C'est pourquoi, dans une variante tout particulièrement avantageuse, l'invention propose d'utiliser un moteur électrique, linéaire ou rotatif, pour contrôler les mouvements de débattement de la roue. Il est ainsi proposé un agencement qui permet de loger un tel moteur dans l'ensemble selon l'invention, tout en restant sensiblement dans les limites de l'espace intérieur de la roue. L'invention présente ainsi l'avantage de se prêter particulièrement bien au pilotage actif des caractéristiques de suspension, et plus précisément au pilotage par voie électrique directe des caractéristiques de suspension.

Notons que, lorsque le guidage en translation du barreau est « sans frottement », c'est à dire comporte aussi peu de frottements que possible, le contrôle du mouvement de débattement s'en trouve facilité car il n'est pas faussé par des frottements parasites dont l'ampleur est souvent variable. Un guidage par roulement est très approprié. On peut utiliser des galets coopérant avec des chemins de roulement aménagés sur le barreau, les galets étant montés rotatifs sur et par rapport à l'organe de guidage. On pourrait aussi concevoir des surfaces de contact en glissement relatif, dans la mesure où elles comportent un traitement approprié ou bien dans la mesure où elles sont lubrifiées de façon suffisante. Par exemple, on peut utiliser un palier fluide. Cette variante se prête tout particulièrement bien au contrôle du débattement essentiellement au moyen d'une machine électromécanique que l'on peut piloter à cet effet, car l'absence de frottement sec en simplifie le pilotage et améliore les performances globales.

L'invention s'applique aussi bien aux roues directrices qu'aux roues motrices et aux roues à la fois directrices et motrices. Elle permet d'implanter un pivot et d'implanter le point de commande du braquage. Elle permet, dans le cas de roues directrices, de disposer l'axe de pivotement de la roue dans le plan de roue défini ci-dessus, c'est à dire de pouvoir adopter la solution dite « du pivot dans l'axe ». Elle permet d'implanter un organe de transmission à la roue d'un couple de rotation (prise de couple). Cet organe est attaqué par un arbre de transmission classique ou bien est attaqué directement par un moteur de traction, par exemple un moteur électrique, qui dans ce cas peut faire lui-même partie de l'ensemble proposé par l'invention. Dans ce dernier cas, le couple qu'il faut développer conduit à un volume du moteur tel qu'il se pourrait qu'il déborde plus sensiblement du volume interne à la roue. Cependant, même dans ce cas, le stator du moteur peut prendre appui dans ledit ensemble, de sorte que le couple de réaction est interne audit ensemble. Cela contribue aussi à la grande compacité de l'ensemble, compte tenu de toutes les fonctions assurées, et facilite l'implantation et l'adaptation au véhicule.

L'invention sera mieux comprise par la description qui va suivre, d'exemples donnés à titre non limitatif, en se référant au dessin annexé sur lequel :
la figure 1 est une vue partielle et coupe partielle selon I-I à la figure 2, représentant un premier mode de réalisation de l'invention ;
la figure 2 est une vue partielle et coupe partielle selon II-II à la figure 1, représentant le premier mode de réalisation de l'invention ;
la figure 3 est une coupe selon III-III à la figure 2, représentant le premier mode de réalisation de l'invention ;
la figure 4 est une coupe selon IV-IV à la figure 2, représentant le premier mode de réalisation de l'invention ;
la figure 5 est une vue de face avec quelques coupes partielles selon un plan perpendiculaire à l'axe de rotation, représentant un deuxième mode de réalisation de l'invention ;
la figure 6 est une vue partielle avec coupe selon C_{B}-C'_{B} et selon P-P' à la figuré 5, représentant le deuxième mode de réalisation de l'invention ;
la figure 7 est une coupe selon VII-VII à la figure 5 ;
la figure 8 est une vue partielle avec coupe partielle selon VIII-VIII à la figure 9, représentant un troisième mode de réalisation de l'invention ;
la figure 9 est une vue partielle avec coupe partielle selon IX-IX à la figure 8, représentant le troisième mode de réalisation de l'invention.

Aux différentes figures, on reconnaît un pneu 1 monté sur une jante 10, celle-ci étant réalisée en deux parties 11 et 12, séparables axialement, suivant l'une des techniques possibles permettant de monter un pneu 1 sur une jante. On pourrait bien entendu adopter d'autres solutions, comme un pneu accroché définitivement à sa jante, ou bien un bandage élastique non gonflé ou non pneumatique.

La jante 10 est reliée à un disque 13 de roue. La jante 10 et le disque 13 forment une roue 14. Cette roue 14 est montée sur un moyeu 15 grâce à des goujons 16. Un disque de frein 17 est solidaire du moyeu 15. Les détails de réalisation du montage d'une roue et d'un disque de frein sur un moyeu sont bien connus de l'homme du métier et ne nécessitent pas de plus ample explication. Rappelons simplement qu'il peut exister une fixation assez faiblement dimensionnée entre le disque de frein 17 et le moyeu 15, et que la reprise des efforts de service est assurée par la fixation due aux goujons 16. Une roue dentée 18, dont le rôle apparaîtra ci-dessous, est également solidaire du moyeu 15. Le moyeu 15 et la roue dentée 18 sont rendus solidaires l'un de l'autre par un ensemble de boulons 19, de façon à non seulement maintenir les pièces l'une sur l'autre, mais aussi assurer la transmission d'un couple entre la roue dentée 18 et le moyeu 15. Le sous-ensemble qui vient d'être décrit constitue les pièces tournantes de l'ensemble selon l'invention. Leur axe de rotation est l'axe XX'.

Ces pièces tournantes sont montées sur un porte-roue 3 par l'intermédiaire d'un roulement 2. Le porte-roue 3 forme une bride insérée dans l'espace libre situé axialement entre le moyeu 15 et la roue dentée 18. La bague extérieure 22 du roulement 2 est solidaire du porte-roue 3, grâce à des boulons 23.

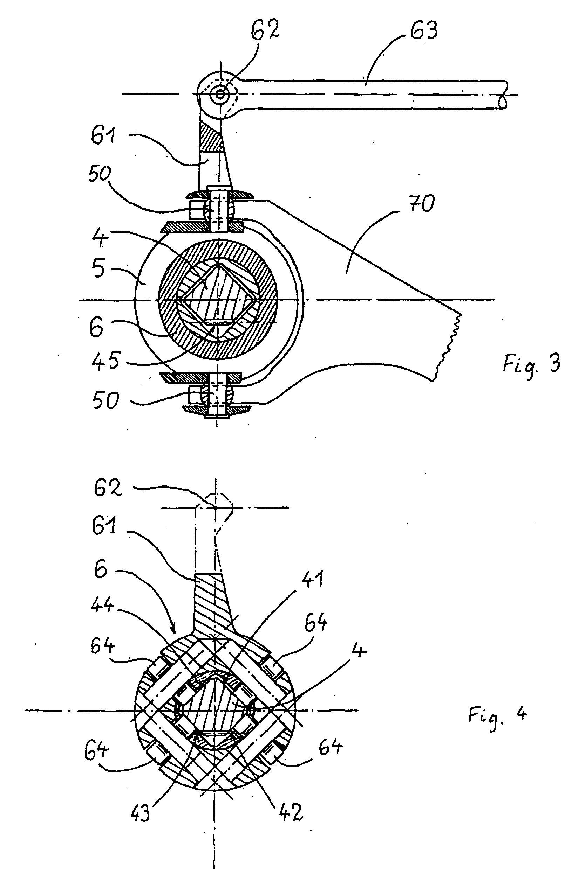

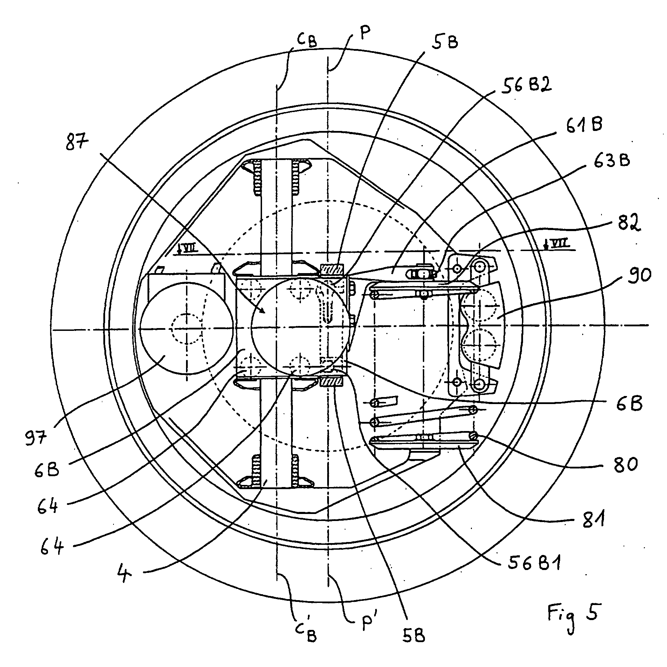

Le porte-roue 3 est lui-même rendu solidaire d'un barreau 4. Le porte-roue 3 comporte deux pattes 31, 32 fixées aux deux extrémités dudit barreau 4. Le barreau 4 illustrant l'invention a un axe longitudinal CC'. En outre, il est ici choisi de section rectangulaire (en fait, la section est carrée - voir figures 3 et 4). Ce type de section, parmi d'autres possibles (comme une section polygonale quelconque), va permettre de bloquer la rotation du barreau 4 autour de son axe CC'. Le barreau 4 comporte ainsi quatre chemins de roulement 41, 42, 43, 44 (figure 4). Le porte-roue 3 et le barreau 4 sont agencés et montés l'un par rapport à l'autre de sorte que l'axe CC' du barreau 4 est perpendiculaire, et sécant à l'axe XX' de rotation de la roue 14, l'avantage de la disposition centrale du barreau étant notamment qu'elle rend potentiellement maximale la course de la suspension. Le barreau 4 et le porte-roue 3 font partie de ce que l'on appelle usuellement les organes non-suspendus, et sont non-tournants.

Le barreau 4 est en appui sur un ensemble de huit galets 64, coopérant deux par deux avec les chemins de roulement 41, 42, 43, 44 (voir figure 4). Ces galets sont montés rotatifs sur un organe de guidage 6, afin d'autoriser la translation du barreau 4 le long de son axe CC'. Notons que l'organe de guidage 6 entoure le barreau 4, et que le porte-roue est monté sur le barreau aux deux extrémités de celui-ci. Le barreau est logé dans une enveloppe délimitée radialement par le diamètre de référence φ_{R}, et axialement, à partir d'une limite fixée par le disque de ladite roue, par une largeur correspondant sensiblement à la largeur de référence L_{R}.

Le barreau 4 et l'organe de guidage 6 forment une coulisse. Notons que le barreau 4 ne peut tourner autour de l'axe CC' indépendamment de l'organe de guidage 6. L'organe de guidage 6 est lui même monté rotatif autour de l'axe CC' du barreau 4 et dans un support 5, par l'intermédiaire de roulements 56. L'organe de guidage 6 et le support 5 forment ainsi un pivot dont le rôle est d'autoriser un degré de liberté de rotation du porte-roue 3 par rapport au support 5. Le barreau est donc monté dans un pivot. Notons encore que la disposition centrale du barreau facilite aussi la réalisation d'un pivot : si l'axe longitudinal du barreau était décalé par rapport au centre de la roue, l'implantation du pivot devrait malgré tout de préférence faire en sorte que l'axe autour duquel la roue braque reste centré dans la roue, de sorte que l'on ne pourrait pas matériellement implanter le pivot directement autour de l'organe de guidage du barreau.

Ainsi, il existe un et un seul degré de liberté entre l'organe de guidage 6 et le porte-roue 3 : une translation relative, le long du même axe CC'. Cette translation est suffisante aussi bien vers le haut que vers le bas. Elle permet donc une course de suspension suffisante aussi bien à la détente qu'à la compression. A titre d'illustration, notons que la course peut atteindre une valeur de l'ordre de la moitié du diamètre intérieur φ_{R} de la jante 10. Des butées 33, 34 réalisées en un matériau élastique comme par exemple du caoutchouc, évitent le choc brutal des pattes 31 et 32 directement sur les bords 60 de l'organe de guidage 6, lorsque le débattement de la suspension atteint la fin de la course.

Par ailleurs, il existe un et un seul degré de liberté entre le support 5 et l'organe de guidage 6 : une rotation relative, et cette rotation relative intervient autour de l'axe CC'. L'amplitude de cette rotation est suffisante pour assurer le braquage de la roue 14. Elle est limitée géométriquement par la rencontre de la roue 14 ou du porte-roue 3 avec le support ou des moyens mécaniques de montage du support sur la caisse du véhicule, ou plus exactement elle est limitée par des butées (non représentées) pour empêcher tout contact indésirable de la roue avec des pièces non tournantes. Notons encore qu'un bras de levier 61 (figure 3) est solidaire de l'organe de guidage 6. Le levier 61 aboutit à un point 62 d'attaque à relier à une biellette de commande de direction 63. Dans le cas d'une roue non directrice, on peut bloquer le degré de liberté de rotation autour de l'axe CC' par un montage adéquat d'une barre d'accouplement au point 62. Mais on peut aussi, bien entendu, réaliser un organe de guidage d'une seule pièce avec le support, de sorte que par construction mécanique il n'y a qu'un seul degré de liberté entre le support et le porte-roue, à savoir la translation le long de l'axe CC' procurant le mouvement de suspension.

On a vu que le mouvement de suspension proposée par la présente invention est assuré par la translation relative possible entre le barreau 4 et l'organe de guidage 6. On a aussi vu que le braquage de la roue 14 est rendu possible par la rotation relative entre le support 5 et l'organe de guidage 6, et est contrôlé en agissant sur le levier 61. Le support peut être monté sur le châssis d'un véhicule rigidement, par au moins un point de montage aménagé sur le support à cet effet. C'est l'utilisation la moins élaborée de la liaison au sol proposée par l'invention.

Cependant, l'ensemble illustrant l'invention permet en outre non seulement un réglage du carrossage de la roue, mais aussi un véritable contrôle permanent de ce carrossage. Dans ce cas, on utilise plusieurs points de montage du support, pour définir sur le support un axe AA' et un point de commande B distant dudit axe, l'axe et le point de commande pouvant recevoir des moyens de liaison au châssis agencés de façon à pouvoir agir sur le carrossage de la roue.

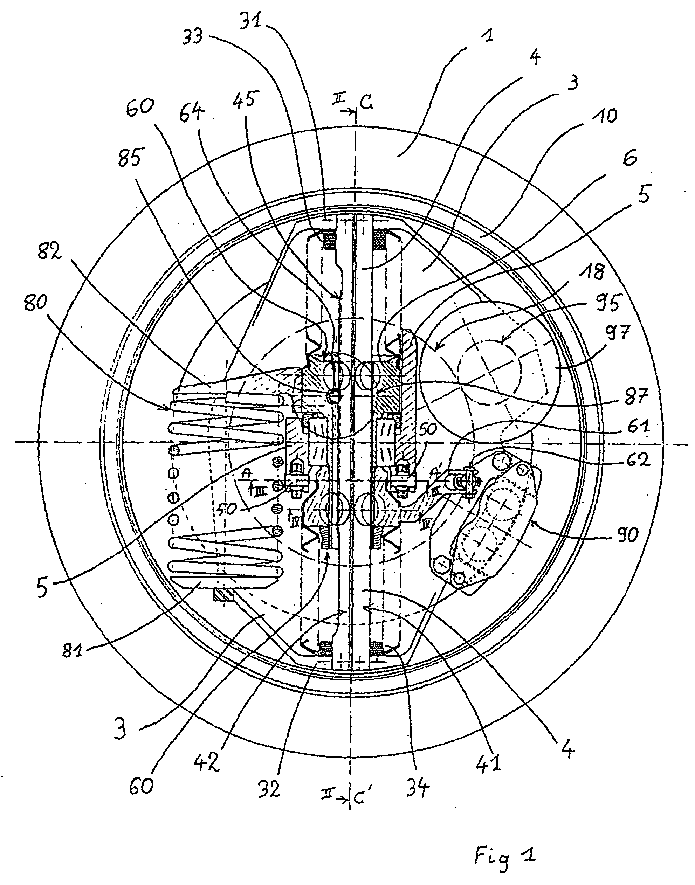

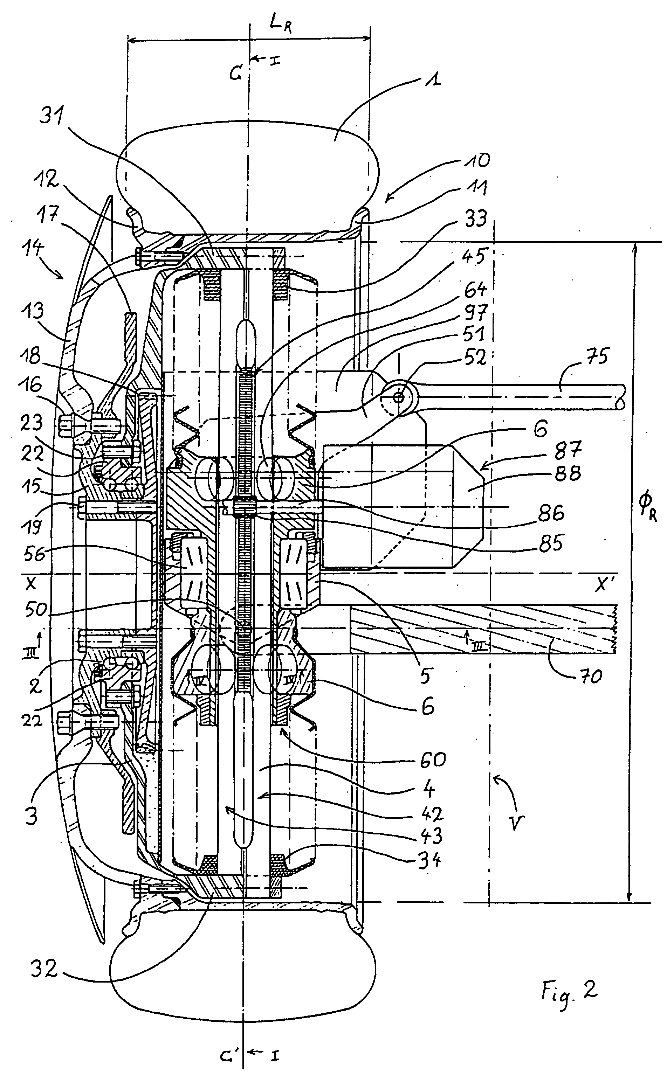

Le support 5 a l'allure d'une boîte cylindrique (figure 2). A une extrémité du support sont disposés deux tourillons 50 alignés. C'est ici à l'extrémité inférieure. Ces tourillons 50 définissent un axe AA'. A l'autre extrémité (ici supérieure) du support 5, on trouve un prolongement 51 (figure 1) portant un tourillon 52, définissant un point de commande. Les tourillons 50 et le point de commande constituent trois points de montage du support. Le support 5 est accroché à la caisse du véhicule par l'intermédiaire d'un bras 70 et d'une barre 75. Le bras 70 est monté sur la caisse du véhicule de façon à pouvoir transmettre le poids de celle-ci et le reporter sur le support 5. Le bras est par exemple encastré dans la caisse du véhicule. Dans ce cas, il subsiste un degré de liberté de basculement du support autour de l'axe AA'. On peut bloquer ce degré de liberté en reliant la barre 75 à la caisse de manière appropriée. Mais on peut aussi utiliser la barre 75 pour imposer une position relative choisie du point de commande (tourillon 52) par rapport aux tourillons 50, c'est à dire par rapport à l'axe AA'. Dans ce cas, on peut changer la valeur du carrossage de la roue 14. Ladite barre 75 est éventuellement de longueur réglable. Ou bien, pour un contrôle continu pendant l'utilisation du véhicule, ladite barre 75 est sollicitée par un mécanisme approprié. L'amplitude de variation du carrossage que permet l'invention est très large ; elle n'est limitée que par la rencontre d'organes de l'ensemble selon l'invention avec l'une ou l'autre des barres de liaison à la caisse, ou bien la rencontre desdits organes avec la caisse elle-même.

On vient de décrire comment la liaison au sol proposée par la présente invention autorise le mouvement de la roue 14 dans le sens vertical, ou plus précisément le long de l'axe CC', l'orientation précise de celui-ci dépendant du montage du support 5 sur la caisse du véhicule. On a aussi décrit comment la liaison au sol proposée autorise le contrôle du braquage et du carrossage de la roue 14. On dispose ainsi d'une roue tournant autour de l'axe XX', l'axe XX' étant mobile verticalement. On va décrire dans la suite comment on peut intégrer à l'ensemble de liaison au sol proposé par l'invention les moyens de contrôler les mouvements de rotation et de débattement de la roue.

Commençons par le mouvement de suspension (débattement de la roue). Dans l'exemple illustrant l'invention, la matérialisation des moyens de contrôle du débattement du barreau par rapport au support est réalisée comme indiqué ci-après. Un ressort 80 est implanté entre une première coupelle 81 liée au porte-roue 3 pour être mobile verticalement avec la roue, et une seconde coupelle 82 solidaire de l'organe de guidage 6, donc immobile verticalement par rapport à la caisse du véhicule. Le ressort 80 est monté entre deux points d'appui (matérialisés par les coupelles 80 et 81) déportés par rapport à l'axe CC' du barreau 4, ce qui facilite son logement dans le volume disponible à l'intérieur de la roue 14, d'un côté dudit barreau 4. Notons en outre que, grâce à cette implantation déportée du ressort 80 par rapport à l'axe du barreau, l'encombrement minimal résiduel du ressort lorsqu'il est comprimé ne retire rien à la course de la suspension telle qu'elle résulte du guidage du barreau 4. Par ailleurs, on dispose d'un volume suffisant pour implanter un ressort capable de supporter une charge correspondant à celles rencontrées sur les véhicules, par exemple les véhicules de tourisme. Ainsi, le ressort est logé dans une enveloppe limite délimitée radialement par le diamètre de référence φ_{R}, et axialement, d'un côté par une limite fixée par le disque de ladite roue et de l'autre côté par un plan virtuel tangent à la jante.

Le barreau 4 comporte une crémaillère 45 à l'intersection entre les chemins de roulement 42 et 43. Un pignon 85 est en prise sur ladite crémaillère. Le pignon 85 transmet son mouvement de rotation au rotor 86 d'une machine électromécanique 87 dont le stator 88 est solidaire de l'organe de guidage 6. Le mouvement linéaire du barreau 4 est ainsi transformé en mouvement rotatif, sur lequel on agit par l'intermédiaire de la machine électromécanique 87 pour apporter la fonction amortissement nécessaire, ou toute autre fonction plus élaborée visant à procurer à la suspension un caractère actif au moyen d'une commande adéquate de ladite machine électromécanique 87. La conception d'une telle fonction élaborée ne fait pas partie en soi de la présente invention, dont l'objectif est de procurer les moyens mécaniques et électromécaniques rendant la chose possible. Ajoutons simplement, pour être complet, qu'une façon simple d'assurer un amortissement est de connecter la machine électromécanique à une charge résistive, et de freiner le mouvement de rotation de son rotor suivant le même principe que les ralentisseurs électriques bien connus équipant certains véhicules routiers comme des cars de transport de passagers. L'invention permet ainsi de réaliser un ensemble dans lequel les moyens de contrôle du débattement sont logés dans une enveloppe globale V délimitée radialement par le diamètre de référence φ_{R}, et axialement, à partir d'une limite fixée par le disque de ladite roue, par une largeur inférieure au double de la largeur de référence L_{R}, ce qui permet d'atteindre une bonne compacité de l'ensemble.

Après les fonctions ressort et amortisseur ou les fonctions équivalentes, examinons l'implantation des moyens de freinage. Rappelons qu'un disque de frein 17 est solidaire du moyeu 15. L'effort de freinage est appliqué sur le disque de frein 17 par un étrier de frein 90 solidaire du porte-roue 3. L'étrier de frein 90 (non visible à la figure 1 pour ne pas la surcharger) est déporté par rapport à l'axe CC' du barreau 4, ce qui permet de le loger dans le volume disponible à l'intérieur de la roue 14, du côté dudit barreau 4 non occupé par le ressort 80. Le barreau 4 est central et unique et l'étrier de frein 90 et le ressort sont montés par rapport au barreau 4 de part et d'autre de celle-ci, sensiblement à l'intérieur du volume délimité par l'encombrement de la roue. L'étrier de frein 90 permet à la demande de pincer le disque de frein 17 par une commande appropriée, par exemple hydraulique ou électrique, ladite commande ne faisant pas partie en soi de la présente invention. Bien entendu, ce type de frein, à disque, n'est qu'une variante constructive et, plus généralement, l'invention peut utiliser des moyens de freinage comportant une pièce de révolution pourvue d'au moins une piste de freinage, ladite pièce de révolution appartenant audit ensemble et étant solidaire du moyeu, ledit ensemble comportant un organe de freinage pour appliquer un matériau de friction sur ladite piste, ledit organe de freinage étant solidaire du porte-roue, ledit organe de freinage et ledit ressort étant montés par rapport au barreau de part et d'autre de celle-ci.

L'invention est illustrée dans son application à une roue motrice. C'est pourquoi l'ensemble comporte dans ce cas particulier une roue dentée 18 solidaire du moyeu 15. La roue dentée 18 est en prise avec un pignon 95 monté tournant sur le porte-roue 3. Ce pignon 95 est solidaire d'un arbre de transmission de façon à pouvoir appliquer un couple audit moyeu, via la roue dentée 18. Dans cet exemple, le couple est fourni par un moteur intégré à l'ensemble proposé par l'invention. C'est ici un moteur électrique 97, dit de traction, dont le stator est solidaire du porte-roue 3. Un tel moteur électrique peut être piloté non seulement pour appliquer un couple moteur, mais aussi un couple freineur au moyeu 15, donc à la roue 14. En variante, la transmission pourrait être mécanique, le dit pignon comprenant alors des moyens pour recevoir un arbre de transmission mécanique de façon à pouvoir appliquer un couple audit moyeu via la roue dentée. On sait réaliser des arbres de transmissions s'accommodant des variations de longueur qu'entraîneraient le débattement de la roue et le cas échéant son braquage.

L'invention permet une construction particulièrement compacte de la liaison au sol. Dans l'exemple décrit, on voit que le moteur électrique de traction est lui aussi logé dans une enveloppe globale V délimitée radialement par le diamètre de référence φ_{R}, et axialement, à partir d'une limite fixée par le disque de ladite roue, par une largeur inférieure au double de la largeur de référence L_{R}. La compacité de l'ensemble est importante, compte tenu du nombre de fonctions réalisées.

On vient de décrire un ensemble de liaison au sol d'un véhicule qui constitue la version la plus élaborée de l'invention. Cette version intègre dans le volume interne d'une roue le guidage assurant le débattement requis. Elle intègre aussi la fonction ressort et la fonction amortissement, celles-ci pouvant prendre des formes sophistiquées pour réaliser une suspension active. Cette version intègre un frein à disque avec son étrier et intègre en outre une fonction motorisation. Elle procure aussi un pivot pour permettre le braquage, et elle se prête à un montage sur la caisse qui permet de faire varier le carrossage.

Les figures 5, 6 et 7 représentent une variante de réalisation offrant toutes les fonctions décrites ci-dessus, sauf la variation de carrossage. Aux dessins et dans la description qui s'y rattache, on a repris les mêmes références lorsque les organes sont identiques ou ne comportent que des différences mineures, et on souligne les différences constructives principales qui sont, en résumé, les suivantes : l'axe du barreau 4 et l'axe de rotation du porte-moyeu 15 sont décalés, l'axe de pivotement étant défini par des points de pivotements agencés sur l'organe de guidage latéralement par rapport à l'axe du barreau. Il en résulte que l'axe de pivotement PP' n'est ici pas confondu avec l'axe de coulissement C_{B}C'_{B} du barreau 4. Cela permet de réaliser le pivotement avec des rotules 56B1 et 56B2 au lieu d'utiliser des roulements (voir le roulement 56 du premier mode de réalisation), tout en agençant les organes pour offrir à la fois un débattement de suspension suffisant et une grande compacité.

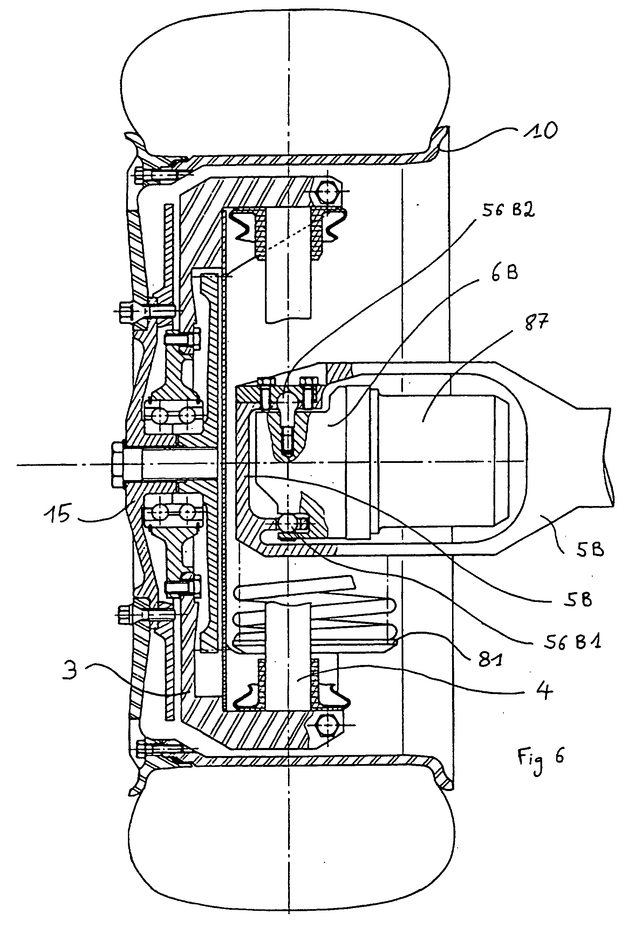

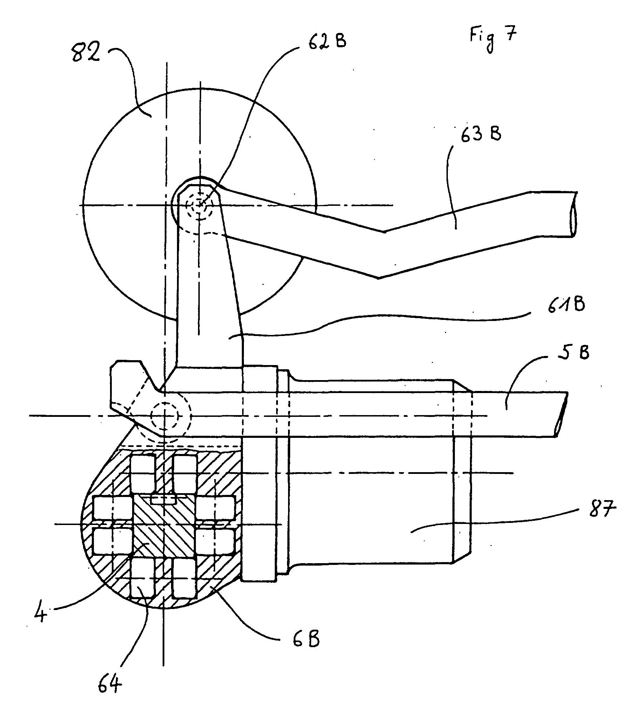

Le support 5B est conçu pour être monté directement sur le châssis d'un véhicule. Du côté de l'ensemble proposé par l'invention, ledit support 5B est relié à l'organe de guidage 6B par deux rotules 56B1 et 56B2 qui définissent l'axe de pivotement PP'. Le support 5B se termine par un enfourchement que l'on voit très bien à la figure 6, refermé à son extrémité, ce qui favorise la rigidité. A l'intérieur de l'enfourchement, on aperçoit la machine électromécanique 87 utilisée pour la suspension de la roue. Tout comme dans l'exemple précédent, l'axe de pivotement PP' est sécant avec l'axe XX' de rotation de la roue et est disposé sensiblement dans le plan médian V-V de la roue. Mais l'organe de guidage 6B guidant le coulissement du barreau 4 est ici nettement décalé par rapport aux rotules 56B1 et 56B2, ce que l'on voit très bien aux figures 5 et 7. Les axes de coulissement C_{B}C'_{B} d'une part et de pivotement PP' d'autre part sont donc décalés. Le ressort 80 et l'étrier de frein 90 sont cette fois logés tous les deux du même côté du barreau 4.

En dehors de cela, on retrouve sensiblement les mêmes organes, notamment les galets 64 coopérant avec des chemins de roulement aménagés sur le barreau 4 pour le guider. On retrouve également un moteur électrique de traction 97. Le ressort 80 est implanté entre une première coupelle 81 liée au porte-roue 3 pour être mobile verticalement avec la roue, et une seconde coupelle 82 solidaire de l'organe de guidage 6B, donc immobile verticalement par rapport à la caisse du véhicule. Le ressort 80 est aussi dans cette variante monté entre deux points d'appui (matérialisés par les coupelles 80 et 81) déportés par rapport à l'axe C_{B}C'_{B} du barreau 4, ce qui est favorable à la compacité. L'ensemble est logé dans la même enveloppe délimitée comme précédemment. Le barreau 4 est logé à un endroit où la place disponible n'est guère inférieure au diamètre intérieur φ_{R} de la jante 10. La translation du barreau 4 dans l'organe de guidage 6B est suffisante aussi bien vers le haut que vers le bas. Elle permet donc une course de suspension suffisante aussi bien à la détente qu'à la compression.

Notons encore qu'un levier 61B (figures 5 et 7) est solidaire de l'organe de guidage 6B. Le levier 61B aboutit à un point 62B d'attaque à relier à une barre de direction 63B. Est également montée sur ce levier celle 82 des coupelles qui est solidaire de l'organe de guidage, reportant ainsi à l'intérieur de la roue la référence châssis par rapport à laquelle la roue va débattre.

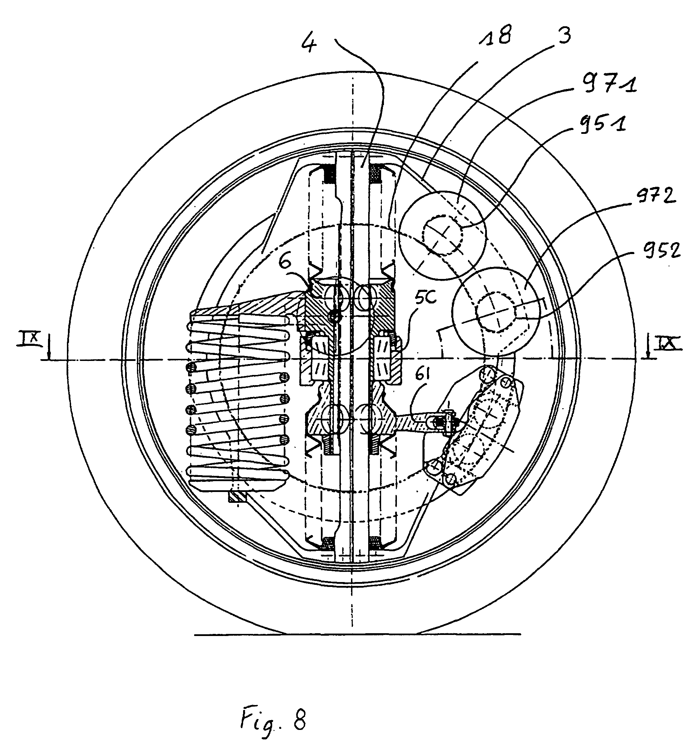

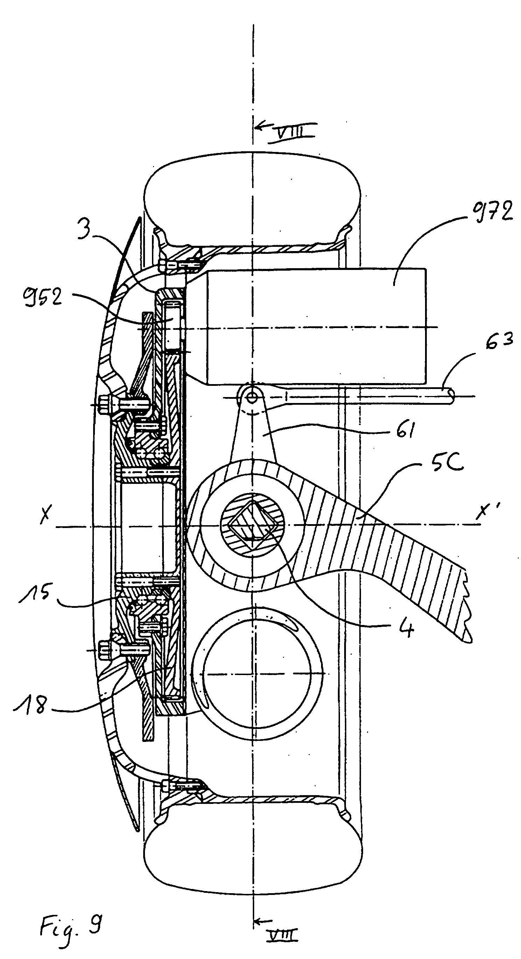

Les figures 8 et 9 montrent une troisième variante fort proche de la première, si ce n'est qu'elle ne permet pas la variation de carrossage. Aux dessins et dans la description qui s'y rattache, on a repris les mêmes références lorsque les organes sont identiques ou ne comportent que des différences mineures, et on souligne les différences constructives principales qui sont, en résumé, les suivantes : la variation qu'elle illustre a trait essentiellement à la traction, c'est à dire à l'application d'un couple au moyeu.

Le support 5C est conçu pour être monté directement sur le châssis d'un véhicule. On retrouve la roue dentée 18 solidaire du moyeu 15, de façon à assurer la transmission d'un couple entre la roue dentée 18 et le moyeu 15. L'axe de rotation est l'axe XX'. On voit à la figure 8 deux moteurs électriques 971 et 972, dits de traction, dont les stators sont solidaires du porte-roue 3. Les rotors des moteurs 971 et 972 entraînent les pignons 951 et 952, eux mêmes étant en prise sur la roue dentée 18. Ces moteurs électriques 971 et 972 peuvent être pilotés non seulement pour appliquer un couple moteur, mais aussi un couple freineur au moyeu 15. On voit donc que l'on dispose de suffisamment de place pour loger plusieurs moteurs de traction, quel que soit le type de moteur (électrique, hydraulique par exemple). De préférence, on utilise des moteurs électriques de traction conçus pour une vitesse de rotation maximale élevée, ce qui à performances visées constantes, diminue le couple requis et donc diminue le volume du moteur. Bien entendu ce type de moteur, à vitesse nominale maximale élevée, peut être utilisé seul. On peut aussi atteindre un couple plus élevé en utilisant plusieurs moteurs, chacun de petit volume. De même, l'implantation d'un moteur électrique dont le rotor attaque en prise directe la roue dentée 18, offrant ainsi une multiplication du couple que fournit le moteur électrique, est une disposition en soi intéressante. Toutes les dispositions constructives proposées contribuent à la grande compacité de l'ensemble et facilite l'implantation et l'adaptation au véhicule.

Selon le véhicule à équiper, voire selon la position de la roue dans le véhicule à équiper, on peut construire des versions plus simples qui constituent encore autant d'applications de l'invention. Bien évidemment, notamment l'existence d'un pivot et de la fonction de motorisation ne sont pas requises dans tous les cas.

Sur la base de ce qui vient d'être exposé, l'homme du métier pourra aussi procéder à des adaptations selon ses propres souhaits, sans sortir du cadre de la présente invention. A la place d'un ressort mécanique, on peut utiliser un ressort pneumatique. Il est possible d'implanter un amortisseur hydraulique classique à l'intérieur du barreau, car on peut aisément prévoir que celle-ci, de forme allongée et élancée, soit creuse et dispose d'une lumière permettant de reporter un point d'appui, solidaire de l'organe de guidage, à l'intérieur du barreau. Au lieu d'un amortisseur hydraulique classique intégré au barreau, on peut aussi envisager de lui intégrer une machine électromécanique linéaire susceptible d'être pilotée à cet effet, dont le stator est lié à l'organe de guidage et dont l'équipage mobile est relié au barreau. On peut aussi implanter dans l'ensemble selon l'invention un vérin hydraulique agissant sur un bloc hydropneumatique ou pneumatique. L'implantation d'un tel vérin peut être interne au barreau, comme il a été dit pour un amortisseur hydraulique classique, ou bien l'implantation peut être assurée ailleurs dans ledit ensemble, par exemple à la même place que le ressort.

L'invention, qui offre un élément de base intégrant toutes les fonctions essentielles de la liaison au sol d'un véhicule, permet bien entendu de fixer ladite liaison au sol par l'intermédiaire d'éléments de filtrage des vibrations (blocs élastiques en caoutchouc) assurant le montage du ou des points de montage de l'ensemble sur le châssis. Les éléments d'accrochage au châssis peuvent aussi, si on le souhaite, offrir une certaine flexibilité longitudinale dans la liaison de cet ensemble au châssis.

L'invention offre l'avantage de procurer un système de suspension dont la cinématique est pure, ce qui facilite son implantation sur un véhicule en disposant l'axe de coulissement dans l'attitude choisie, par exemple pour donner un angle de chasse prédéterminée, et ce qui facilite son utilisation en combinaison avec d'autres moyens procurant des fonctions plus élaborées comme par exemple une suspension horizontale (en permettant un véritable débattement longitudinal des points de montage du support par rapport à la caisse du véhicule) ou encore par exemple un contrôle du carrossage.

## Revendications

1. Ensemble de liaison au sol d'un véhicule automobile, ledit ensemble comportant un moyeu (15) conçu pour supporter une roue, ladite roue comprenant un disque et définissant un plan de roue passant par le centre de l'aire de contact avec le sol d'un pneu ou un bandage élastique monté sur la roue, ladite roue ayant une largeur de référence (L_{R}) centrée par rapport audit plan de roue et un diamètre de référence (φ_{R}), ledit ensemble comportant un porte-roue (3) définissant l'axe de rotation du moyeu, un support (5, 5B, 5C), un organe de guidage (6, 6B) pour guider en translation relative le porte-roue par rapport au support, des moyens de montage pour permettre le montage du support sur le châssis d'un véhicule, le porte-roue étant monté sur l'organe de guidage par l'intermédiaire d'un barreau (4) allongé et unique, coulissant par rapport à et guidé par l'organe de guidagele porte-roue étant monté sur le barreau aux deux extrémités de celui-ci, ledit ensemble comportant des moyens pour supporter la charge du véhicule transmise par le support au porte-roue, **caractérisé en ce que** le barreau (4) est monté dans l'organe de guidage à rotation bloquée par rapport à l'organe de guidage et autour de l'axe de coulissement, et **en ce que** le porte-roue (3), le barreau (4), et l'organe de guidage (6, 6B) sont logés dans une enveloppe limite délimitée radialement par le diamètre de référence (φ_{R}), et axialement, d'un côté par une limite fixée par le disque de ladite roue et de l'autre côté par un plan virtuel tangent à l'extrémité de ladite largeur de référence.

2. Ensemble selon la revendication 1, dans lequel les moyens pour supporter la charge comprennent un ressort (80) monté entre deux points d'appui disposés l'un sur le porte-roue et l'autre sur le support, lesdits points d'appui étant déportés par rapport à l'axe du barreau.

3. Ensemble selon la revendication 2, dans lequel le ressort (80) est logé dans ladite enveloppe limite.

4. Ensemble de liaison au sol d'un véhicule automobile, ledit ensemble comportant un moyeu (15) conçu pour supporter une roue, ladite roue comprenant un disque et définissant un plan de roue passant par le centre de l'aire de contact avec le sol d'un pneu ou un bandage élastique monté sur la roue, ledit ensemble comportant :
• un support (5, 5B, 5C) suspendu,
• des moyens de montage pour permettre le montage du support sur le châssis d'un véhicule,
• un organe de guidage (6, 6B) suspendu, immobile en débattement vertical par rapport au support,
• un barreau (4) allongé et unique, non suspendu, guidé en translation relative par l'organe de guidage, et coulissant par rapport audit organe de guidage, à l'intérieur de celui-ci,
• un porte-roue (3) non suspendu, monté sur le barreau aux deux extrémités de celui-ci, ledit porte-roue (3) définissant l'axe de rotation dudit moyeu,
• un ressort pour supporter la charge du véhicule transmise par le support au porte-roue, ledit ressort agissant entre deux points d'appui l'un solidaire du porte-roue et l'autre solidaire de l'organe de guidage
**caractérisé en ce que** l'organe de guidage (6, 6B) et le support (5, 5B) forment un pivot qui autorise un degré de liberté de braquage du porte-roue par rapport au support, **en ce que** l'organe de guidage comporte un bras de levier dont l'extrémité peut recevoir une biellette de commande de direction, et **en ce que** le barreau (4) est monté dans l'organe de guidage à rotation relative bloquée par rapport à l'organe de guidage et autour de l'axe de coulissement.

5. Ensemble de liaison au sol d'un véhicule automobile, ledit ensemble comportant un moyeu (15) conçu pour supporter une roue, ladite roue comprenant un disque et définissant un plan de roue passant par le centre de l'aire de contact avec le sol d'un pneu ou un bandage élastique monté sur la roue, ledit ensemble comportant :
• un support (5, 5B, 5C) suspendu,
• des moyens de montage pour permettre le montage du support sur le châssis d'un véhicule,
• un organe de guidage (6, 6B) suspendu, immobile en débattement vertical par rapport au support,
• un barreau (4) allongé et unique, guidé par et coulissant par rapport à l'organe de guidage et à l'intérieur de celui-ci,
• un porte-roue (3) non suspendu, monté sur le barreau aux deux extrémités de celui-ci, ledit porte-roue (3) définissant l'axe de rotation dudit moyeu,
• un ressort pour supporter la charge du véhicule transmise par le support au porte-roue,
**caractérisé en ce que** ledit ressort agit entre deux points d'appui décalés par rapport à l'axe du barreau, l'un solidaire du porte-roue et l'autre solidaire de l'organe de guidage, le ressort (80) étant déporté par rapport à l'axe du barreau.

6. Ensemble selon l'une des revendications 4 ou 5 dans lequel, en considérant pour ladite roue une largeur de référence (L_{R}) centrée par rapport audit plan de roue et un diamètre de référence (φ_{R}), le porte-roue (3), le barreau (4), et l'organe de guidage (6, 6B) sont logés dans une enveloppe limite délimitée radialement par le diamètre de référence (φ_{R}), et axialement, d'un côté par une limite fixée par le disque de ladite roue et de l'autre côté par un plan virtuel tangent à l'extrémité de ladite largeur de référence.

7. Ensemble selon l'une des revendications 1 à 6, dans lequel le guidage en translation du barreau par l'organe de guidage est un guidage essentiellement sans frottement, ledit ensemble comprenant des moyens de contrôle du débattement comportant essentiellement une machine électromécanique linéaire susceptible d'être pilotée à cet effet, dont le stator est lié à l'organe de guidage et dont l'équipage mobile est relié au barreau.

8. Ensemble selon l'une des revendications 1 à 6, dans lequel le guidage en translation du barreau par l'organe de guidage est un guidage essentiellement sans frottement, ledit ensemble comprenant des moyens de contrôle du débattement comportant essentiellement une crémaillère (45) aménagée sur le barreau (4), en prise avec un pignon monté tournant sur l'organe de guidage, la rotation dudit pignon étant contrôlée par une machine électromécanique rotative (87), susceptible d'être pilotée à cet effet.

9. Ensemble selon l'une des revendications 7 ou 8, dans lequel des galets (64) coopèrent avec des chemins de roulement (41, 42, 43, 44) aménagés sur le barreau (4), lesdits galets étant montés rotatifs sur l'organe de guidage (6, 6B), afin de guider sans frottement par un roulement la translation du barreau (4).

10. Ensemble selon l'une des revendications 7 à 9, dans lequel les moyens de contrôle du débattement sont logés dans une enveloppe globale (V) délimitée radialement par le diamètre de référence (φ_{R}), et axialement, à partir d'une limite fixée par le disque de ladite roue, par une largeur inférieure au double de la largeur de référence (L_{R}).

11. Ensemble selon l'une des revendications 1 à 10, dans lequel une roue dentée (18) est solidaire du moyeu, ladite roue dentée étant en prise avec un pignon monté tournant sur le porte-roue, le mouvement dudit pignon étant commandé par un moteur (97) de traction dont le stator est solidaire du porte-roue, dont le rotor entraîne en prise directe ledit pignon, de façon à pouvoir appliquer un couple audit moyeu via la roue dentée.

12. Ensemble selon la revendication 11, dans lequel un moteur électrique de traction est logé dans une enveloppe globale (V) délimitée radialement par le diamètre de référence (φ_{R}), et axialement, à partir d'une limite fixée par le disque de ladite roue, par une largeur inférieure au double de la largeur de référence (L_{R}).

13. Ensemble selon l'une des revendications 1 à 10, dans lequel une roue dentée (18) est solidaire du moyeu, ladite roue dentée étant en prise avec un pignon monté tournant sur le porte-roue, le dit pignon comprenant des moyens pour recevoir un arbre de transmission mécanique de façon à pouvoir appliquer un couple audit moyeu via la roue dentée.

14. Ensemble selon l'une des revendications 1 à 3 ou 5 à 13, dans lequel l'organe de guidage (6, 6B) et le support (5, 5B) forment un pivot qui autorise un degré de liberté de rotation du porte-roue par rapport au support, et dans lequel l'organe de guidage comporte un bras de levier dont l'extrémité peut recevoir une biellette de commande de direction.

15. Ensemble selon la revendication 4 ou 14, dans lequel l'organe de guidage (6) entoure le barreau (4) et dans lequel l'axe du barreau (4) et l'axe de rotation du porte-moyeu (15) sont sécants, l'axe de pivotement étant confondu avec l'axe du barreau de sorte que ledit barreau est monté coulissant dans ledit pivot.

16. Ensemble selon la revendication 4 ou 14, dans lequel l'organe de guidage (6) entoure le barreau et dans lequel l'axe du barreau (4) et l'axe de rotation du porte-moyeu (15) sont décalés, l'axe de pivotement étant défini par des points de pivotements agencés sur l'organe de guidage latéralement par rapport à l'axe du barreau.

17. Ensemble selon l'une des revendications 2 à 16, dans lequel un levier (61B) solidaire de l'organe de guidage (6B) aboutit à un point (62B) d'attaque à relier à une barre de direction, 63B, l'un des deux points d'appui du ressort (80) étant également monté sur ledit levier (61 B).

18. Ensemble selon l'une des revendications 1 à 17, dans lequel ledit moyeu est conçu pour supporter des moyens de freinage, les moyens de freinage comportant une pièce de révolution pourvue d'au moins une piste de freinage, ladite pièce de révolution appartenant audit ensemble et étant solidaire du moyeu, ledit ensemble comportant un organe de freinage pour appliquer un matériau de friction sur ladite piste, ledit organe de freinage étant solidaire du porte-roue.

19. Ensemble selon l'une des revendications 1 à 18, dans lequel le ou les points de montage du support définissent sur le support un axe (AA') et un point de commande (B) distant dudit axe, l'axe et le point de commande pouvant recevoir des moyens de liaison au châssis agencées de façon à pouvoir agir sur le carrossage de la roue.

## Patentansprüche

1. Baugruppe zur Verbindung eines Kraftfahrzeuges mit dem Boden, wobei die genannte Baugruppe eine Nabe (15) aufweist, die dazu konzipiert ist, ein Rad zu tragen, das genannte Rad eine Scheibe aufweist und eine Radebene definiert, die durch die Mitte des Bereiches der Berührung eines Reifens oder einer elastischen Bandage, der bzw. die auf dem Rad montiert ist, mit dem Boden hindurchläuft, das genannte Rad eine Bezugsbreite (L_{R}), die bezüglich der genannten Radebene zentriert ist, und einen Bezugsdurchmesser (Φ_{R}) aufweist, die genannte Baugruppe einen Radträger (3) aufweist, der die Drehachse der Nabe definiert, einen Träger (5, 5B, 5C), ein Führungsorgan (6, 6B), um den Radträger in der relativen Translationsbewegung bezüglich des Trägers zu führen, und Montagemittel aufweist, um die Montage des Trägers auf dem Fahrgestell eines Fahrzeugs zu gestatten, wobei der Radträger auf dem Führungsorgan mittels eines länglichen und einzigen Stabes (4) montiert ist, der bezüglich des Führungsorganes gleitet und durch dieses bei blockierter Drehung um die Achse der Gleitbewegung geführt ist, der Radträger auf dem Stab an dessen beiden Enden montiert ist, und die genannte Baugruppe Mittel aufweist, um die Last des Fahrzeugs zu tragen, die durch den Träger auf den Radträger übertragen wird, **dadurch gekennzeichnet, daß** der Stab (4) im Führungsorgan zur gesperrten Drehung bezüglich des Führungsorganes und um die Achse der Gleitbewegung herum angebracht ist, und daß der Radträger (3), der Stab (4) und das Führungsorgan (6, 6B) in einer Begrenzungsumhüllung untergebracht sind, die radial durch den Bezugsdurchmesser (Φ_{R}) und axial auf der einen Seite durch eine feste Begrenzung durch die Radscheibe und auf der anderen Seite durch eine virtuelle Ebene begrenzt ist, die das Ende der genannten Bezugsbreite tangiert.

2. Baugruppe nach Anspruch 1, worin die Mittel zum Tragen der Ladung eine Feder (80) aufweisen, die zwischen zwei Auflagepunkten montiert ist, von denen der eine auf dem Radträger und der andere auf dem Träger angeordnet ist, wobei die genannten Auflagepunkte in Bezug auf die Achse des Stabes (4) seitlich angeordnet sind.

3. Baugruppe nach Anspruch 2, worin die Feder (80) in der genannten Begrenzungsumhüllung aufgenommen ist.

4. Baugruppe zur Verbindung eines Kraftfahrzeuges mit dem Boden, wobei die genannte Baugruppe eine Nabe (15) aufweist, die zum Tragen eines Rades konzipiert ist, das genannte Rad eine Scheibe aufweist und eine Radebene definiert, die durch die Mitte des Berührungsbereiches eines Reifens oder einer elastischen Bandage hindurchläuft, der bzw. die auf dem Rad montiert ist, und die Baugruppe die folgenden Merkmale aufweist:
• einen aufgehängten Träger (5, 5B, 5C),
• Montagemittel, um die Montage des Trägers auf dem Fahrgestell eines Fahrzeuges zu gestatten,
• ein aufgehängtes Führungsorgan (6, 6B), das in Bezug auf den Träger beim vertikalen Einfedern unbeweglich ist,
• einen länglichen und einzigen Stab (4), der nicht aufgehängt ist, zur Translation in Bezug auf das Führungsorgan geführt ist und bezüglich des genannten Führungsorganes in dessen Inneren gleitet,
• einen nicht aufgehängten Radträger (3), der am Stab an dessen beiden Enden angebracht ist, wobei der genannte Radträger (3) die Drehachse der genannten Nabe definiert, und
• eine Feder zum Tragen der Last des Fahrzeugs, die durch den Träger auf den Radträger übertragen wird, wobei die genannte Feder zwischen zwei Auflagepunkten wirkt, von denen der eine fest, mit dem Radträger und der andere fest mit dem Führungsorgan verbunden ist,
**dadurch gekennzeichnet, daß** das Führungsorgan (6, 6B) und der Träger (5, 5B) einen Schwenkzapfen bilden, der einen Freiheitsgrad für den Lenkeinschlag des Radträgers in Bezug auf den Träger bildet, daß das Führungsorgan einen Hebelarm aufweist, dessen Ende eine Richtungssteuerschwinge aufnehmen kann, und daß der Stab (4) im Führungsorgan zur blockierten, relativen Drehbewegung in Bezug auf das Führungsorgan und rund um die Gleitachse angebracht ist.

5. Baugruppe zur Verbindung eines Kraftfahrzeuges mit dem Boden, wobei die genannte Baugruppe eine Nabe (15) aufweist, die zum Tragen eines Rades konzipiert ist, das genannte Rad eine Scheibe aufweist und eine Radebene definiert, die durch die Mitte des Berührungsbereiches eines Reifens oder einer elastischen Bandage hindurchläuft, der bzw. die auf dem Rad montiert ist, und die Baugruppe die folgenden Merkmale aufweist:
• einen aufgehängten Träger (5, 5B, 5C),
• Montagemittel, um die Montage des Trägers auf dem Fahrgestell eines Fahrzeuges zu gestatten,
• ein aufgehängtes Führungsorgan (6, 6B), das in Bezug auf den Träger beim vertikalen Einfedern unbeweglich ist,
• einen länglichen und einzigen Stab (4), der nicht aufgehängt ist, durch das Führungsorgan geführt ist und bezüglich dessen in dessen Inneren gleitet,
• einen nicht aufgehängten Radträger (3), der am Stab an dessen beiden Enden angebracht ist, wobei der genannte Radträger (3) die Drehachse der genannten Nabe definiert, und
• eine Feder zum Tragen der Last des Fahrzeugs, die durch den Träger auf den Radträger übertragen wird,
**dadurch gekennzeichnet, daß** die genannte Feder zwischen zwei Auflagepunkten wirkt, die in Bezug auf die Achse des Stabes versetzt sind, von denen der eine fest mit dem Radträger und der andere fest mit dem Führungsorgan verbunden ist, wobei die Feder (80) bezüglich der Achse des Stabes zur Seite verschoben ist.

6. Baugruppe nach einem der Anspüche 4 oder 5, worin, wenn man für das genannte Rad eine Bezugsbreite (L_{R}) in Betracht zieht, die bezüglich der genannten Radebene zentriert ist, und einen Bezugsdurchmesser (Φ_{R}), der Radträger (3), der Stab (4) und das Führungsorgan (6, 6B) in einer Begrenzungsumhüllung sitzen, die radial durch den Bezugsdurchmesser (Φ_{R}) und axial auf der einen Seite durch eine Begrenzung begrenzt ist, die durch die Scheibe des genannten Rades festgelegt ist, und auf der anderen Seite durch eine virtuelle Ebene, die das Ende der genannten Bezugsbreite tangiert.

7. Baugruppe nach einem der Ansprüche 1 bis 6, worin die Führung zur Translation des Stabes durch das Führungsorgan eine im wesentlichen reibungslose Führung ist, wobei die genannte Baugruppe Mittel zur Steuerung der Durchfederung aufweist, die im wesentlichen eine lineare, elektromechanische Vorrichtung aufweist, die imstande ist, zu diesem Zweck gesteuert zu werden, deren Stator mit dem Führungsorgan verbunden ist und deren bewegliche Ausstattung mit dem Stab verbunden ist.

8. Baugruppe nach einem der Ansprüche 1 bis 6, worin die Führung bei der Translation des Stabes durch das Führungsorgan im wesentlichen eine reibungslose Führung ist, wobei die genannte Baugruppe Mittel zum Steuern des Durchfederns aufweist, im wesentlichen mit einer Zahnstange (45), die an der Stange (4) angeordnet ist und in Eingriff mit einem Ritzel steht, das auf dem Führungsorgan drehend angebracht ist, wobei die Drehung des genannten Ritzels durch eine drehbare, elektromechanische Vorrichtung (87) gesteuert wird, die zu diesem Zweck zur Steuerung befähigt ist.

9. Baugruppe nach einem der Ansprüche 7 oder 8, worin Rollen (64) mit Rollwegen (41, 42, 43, 44) zusammenwirken, die auf dem Stab (4) angeordnet sind, wobei die genannten Rollen auf Führungsorganen (6, 6B) drehbar angebracht sind, um reibungslos durch eine Rollbewegung die Translation des Stabes (4) zu führen.

10. Baugruppe nach einem der Ansprüche 7 bis 9, worin Mittel zur Steuerung des Durchfederns in einer allgemeinen Umhüllung (V) sitzen, die radial durch den Bezugsdurchmesser (Φ_{R}) und axial, ausgehend von einer festen Begrenzung durch die Scheibe des genannten Rades, durch eine Breite begrenzt ist, die kleiner ist als das Doppelte der Bezugsbreite (L_{R}).

11. Baugruppe nach einem der Ansprüche 1 bis 10, worin ein Zahnrad (18) fest mit der Nabe verbunden ist, wobei das genannte Zahnrad in Eingriff mit einem Ritzel steht, das drehend auf dem Radträger angebracht ist, und die Bewegung des genannten Ritzels durch einen Drehmotor (97) gesteuert wird, dessen Stator fest mit dem Radträger verbunden ist und dessen Läufer in unmittelbarem Eingriff das genannte Ritzel antreibt, um auf diese Weise ein Moment über das Zahnrad auf die genannte Nabe aufzubringen.

12. Baugruppe nach Anspruch 11, worin ein Traktions-Elektromotor in einer allgemeinen Umhüllung (V) sitzt, die radial durch den Bezugsdurchmesser (Φ_{R}) und axial, ausgehend von einer festen Begrenzung durch die Scheibe des genannten Rades, durch eine Breite begrenzt ist, die kleiner ist als das Doppelte der Bezugsbreite (L_{R}).

13. Baugruppe nach einem der Ansprüche 1 bis 10, worin ein Zahnrad (18) fest mit der Nabe verbunden ist, wobei das genannte Zahnrad in Eingriff mit einem Ritzel steht, das drehend auf dem Radträger angebracht ist, und wobei das genannte Ritzel Mittel aufweist, um eine Welle zur mechanischen Kraftübertragung aufzunehmen, um derart ein Moment auf die genannte Nabe über das Zahnrad aufzubringen.

14. Baugruppe nach einem der Ansprüche 1 bis 3 oder 5 bis 13, worin das Führungsorgan (6, 6B) und der Träger (5, 5B) einen Schwenkzapfen bilden, der einen Freiheitsgrad zur Drehung des Radträgers bezüglich des Trägers ermöglicht, und worin das Führungsorgan einen Hebelarm aufweist, dessen Ende einen Richtungssteuerungs-Schwenkarm aufnehmen kann.

15. Baugruppe nach Anspruch 4 oder 14, worin das Führungsorgan (6) den Stab (4) umgibt, und worin die Achse des Stabes (4) und die Drehachse des Radträgers (15) einander schneiden, wobei die Schwenkachse zusammengesetzt ist aus der Achse des Stabes, und zwar derart, daß der genannte Stab gleitend in der genannten Schwenkachse angebracht ist.

16. Baugruppe nach Anspruch 4 oder 14, worin das Führungsorgan (6) den Stab umgibt, und worin die Achse des Stabes (4) und die Drehachse des Radträgers (15) versetzt sind, wobei die Schwenkachse durch Schwenkpunkte definiert ist, die auf dem Führungsorgan bezüglich der Achse des Stabes seitlich angeordnet sind.

17. Baugruppe nach einem der Ansprüche 2 bis 16, worin ein Hebel (61B), der fest mit dem Führungsorgan (6B) verbunden ist, gegen einen Angriffspunkt (62B) zur Verbindung mit einer Richtungsstange, 63B, stößt, wobei derjenige der beiden Auflagepunkte der Feder (80) ebenfalls auf dem genannten Hebel (61B) angebracht ist.

18. Baugruppe nach einem der Ansprüche 1 bis 17, worin die genannte Nabe dazu konzipiert ist, Bremsmittel zu tragen, wobei die Bremsmittel ein Umlaufstück umfassen, das mit mindestens einer Bremsbahn versehen ist, wobei das genannte Umlaufstück zur genannten Baugruppe gehört und fest mit der Nabe verbunden ist, die genannte Baugruppe ein Bremsorgan aufweist, um ein Reibungsmaterial auf die genannte Bahn aufzudrücken, und das genannte Bremsorgan fest mit dem Radträger verbunden ist.

19. Baugruppe nach einem der Ansprüche 1 bis 18, worin der oder die Montagepunkt(e) des Trägers auf dem Träger eine Achse (AA') und einen beabstandeten Steuerpunkt (B) der genannten Achse bilden, wobei die Achse und der Steuerpunkt Mittel zur Verbindung mit dem Fahrgestell aufnehmen können, die derart angeordnet sind, daß man auf den Sturz des Rades einwirken kann.

## Claims

1. A wheel connecting assembly for an automobile, said assembly comprising a hub (15) designed to support a wheel, said wheel comprising a disc and defining a wheel plane passing through the centre of the area of contact with the ground of a tyre or an elastic casting mounted on the wheel, said wheel having a reference width (L_{R}) centred relative to said wheel plane and a reference diameter (φ_{R}), said assembly comprising a wheel carrier (3) defining the axis of rotation of the hub, a support (5, 5B, 5C), a guide member (6, 6B) for guiding the wheel carrier in translational movement relative to the support, mounting means for making it possible to mount the support on the chassis of a vehicle, the wheel carrier being mounted on the guide member by means of a single elongate bar (4) sliding relative to and guided by the guide member, the wheel carrier being mounted on the bar at the two ends of the latter, said assembly comprising means for supporting the vehicle load transmitted by the support to the wheel carrier, **characterised in that** the bar (4) is mounted in the guide member so as to be fixed in terms of rotation relative to the guide member and about the sliding axis, and **in that** the wheel carrier (3), the bar (4) and the guide member (6, 6B) are accommodated in a limiting envelope delimited radially by the reference diameter (φ_{R}) and axially, on one side, by a limit set by the disc of said wheel and, on the other side, by a virtual plane tangent to the end of said reference width.

2. An assembly according to claim 1, wherein the means for supporting the load comprise a spring (80) mounted between two bearing points arranged one on the wheel carrier and the other on the support, said bearing points being offset relative to the axis of the bar.

3. An assembly according to claim 2, wherein the spring (80) is accommodated in said limiting envelope.

4. A wheel connecting assembly for an automobile, said assembly comprising a hub (15) designed to support a wheel, said wheel comprising a disc and defining a wheel plane passing through the centre of the area of contact with the ground of a tyre or an elastic casing mounted on the wheel, said assembly comprising:
• a suspended support (5, 5B, 5C),
• mounting means for making it possible to mount the support on the chassis of a vehicle,
• a suspended guide member (6, 6B) which is vertically immovable relative to the support,
• a non-suspended single, elongate bar (4), guided in relative translational movement by the guide member, and sliding relative to said guide member, within the latter,
• a non-suspended wheel carrier (3), mounted on the bar at both ends thereof, said wheel carrier (3) defining the axis of rotation of said hub,
• a spring for supporting the load of the vehicle which is transmitted by the support to the wheel carrier, said spring acting between two bearing points one integral with the wheel carrier and the other integral with the guide member,
**characterised in that** the guide member (6, 6B) and the support (5, 5B) form a pivot which allows a degree of freedom of steering of the wheel carrier relative to the support, **in that** the guide member comprises a lever arm, the end of which can receive a steering control link, and **in that** the bar (4) is mounted in the guide member so as to be fixed in terms of rotation relative to the guide member and about the sliding axis.

5. A wheel connecting assembly for an automobile, said assembly comprising a hub (15) designed to support a wheel, said wheel comprising a disc and defining a wheel plane passing through the centre of the area of contact with the ground of a tyre or an elastic casing mounted on the wheel, said assembly comprising:
• a suspended support (5, 5B, 5C),
• mounting means for making it possible to mount the support on the chassis of a vehicle,
• a suspended guide member (6, 6B) which is vertically immovable relative to the support,
• a single, elongate bar (4), guided by and sliding relative to the guide member and within the latter,
• a non-suspended wheel carrier (3), mounted on the bar at both ends thereof, said wheel carrier (3) defining the axis of rotation of said hub,
• a spring for supporting the load of the vehicle which is transmitted by the support to the wheel carrier,
**characterised in that** said spring acts between two bearing points which are offset relative to the axis of the bar, one integral with the wheel carrier and the other integral with the guide member, the spring (80) being offset relative to the axis of the bar.

6. An assembly according to one of Claims 4 or 5, in which, considering for said wheel a reference width (L_{R}) which is centred relative to said wheel plane and a reference diameter (φ_{R}), the wheel carrier (3), the bar (4) and the guide member (6, 6B) are accommodated in a limiting envelope delimited radially by the reference diameter (φ_{R}) and axially, on one side, by a limit set by the disc of said wheel and, on the other side, by a virtual plane tangent to the end of said reference width.

7. An assembly according to one of claims 1 to 6, wherein the translational guidance of the bar by the guide member is essentially frictionless guidance, said assembly comprising means for controlling the deflection which comprise essentially a linear electromechanical machine which is capable of being operated for this purpose and the stator of which is connected to the guide member and the moveable equipment of which is connected to the bar.

8. An assembly according to one of claims 1 to 6, wherein the translational guidance of the bar by the guide member is essentially frictionless guidance, said assembly comprising means for controlling the deflection which comprise essentially a rack (45) arranged on the bar (4) and in engagement with a pinion mounted rotatably on the guide member, the rotation of said pinion being controlled by a rotary electromechanical machine (87) which is capable of being operated for this purpose.

9. An assembly according to one of claims 7 or 8, wherein rollers (64) co-operate with raceways (41, 42, 43, 44) arranged on the bar (4), said rollers being mounted rotatably on the guide member (6, 6B), in order to guide the translational movement of the bar (4) frictionlessly by means of a rolling bearing.

10. An assembly according to one of claims 7 to 9, wherein the means for controlling the deflection are accommodated in an overall envelope (V) delimited radially by the reference diameter (φ_{R}) and axially, from a limit set by the disc of said wheel, by a width less than twice the reference width (L_{R}).

11. An assembly according to one of claims 1 to 10, wherein a gearwheel (18) is integral with the hub, said gearwheel being in engagement with a pinion mounted rotatably on the wheel carrier, the movement of said pinion being controlled by a traction motor (97), the stator of which is integral with the wheel carrier and the rotor of which drives said pinion by direct engagement, so as to be capable of applying a torque to said hub via the gearwheel.

12. An assembly according to claim 11, wherein an electric traction motor is accommodated in an overall envelope (V) delimited radially by the reference diameter (φ_{R}) and axially, from a limit set by the disc of said wheel, by a width less than twice the reference width (L_{R}).

13. An assembly according to one of claims 1 to 10, wherein a gearwheel (18) is integral with the hub, said gearwheel being in engagement with a pinion mounted rotatably on the wheel carrier, said pinion comprising means for receiving a mechanical transmission shaft, so as to be capable of applying a torque to said hub via the gearwheel.

14. An assembly according to one of claims 1 to 3 or 5 to 13, wherein the guide member (6, 6B) and the support (5, 5B) form a pivot which allows a degree of freedom of rotation of the wheel carrier relative to the support, and wherein the guide member comprises a lever arm, the end of which can receive a steering control link.

15. An assembly according to claim 4 or 14, wherein the guide member (6) surrounds the bar (4), and wherein the axis of the bar (4) and the axis of rotation of the hub carrier (15) are secant, the pivot axis coinciding with the axis of the bar, so that said bar is mounted slideably in said pivot.

16. An assembly according to claim 4 or 14, wherein the guide member (6) surrounds the bar, and wherein the axis of the bar (4) and the axis of rotation of the hub carrier (IS) are offset, the pivot axis being defined by pivot points arranged on the guide member laterally relative to the axis of the bar.

17. An assembly according to one of claims 2 to 16, wherein a lever (61B) integral with the guide member (6B) terminates at an engagement point (62B) to be connected to a steering rod (63B), one of the two bearing points of the spring (80) likewise being mounted on said lever (61B).

18. An assembly according to one of claims 1 to 17, wherein said hub is designed for supporting braking means, the braking means comprising a part of revolution provided with at least one braking track, said part of revolution belonging to said assembly and being integral with the hub, said assembly comprising a braking member for applying a frictional material to said track, said braking member being integral with the wheel carrier.

19. An assembly according to one of claims 1 to 18, wherein the support mounting point or points define, on the support, an axis (AA') and a control point (B) distant from said axis, the axis and the control point being capable of receiving means of connection to the chassis which are arranged so as to be capable of acting on the camber of the wheel.
